(19) Europäisches Patentamt
European Patent Office
Office européen des brevets

(11) **EP 2 023 374 A2**

(12) **EUROPEAN PATENT APPLICATION**

(43) Date of publication:
**11.02.2009 Bulletin 2009/07**

(51) Int Cl.:
***H01J 61/46*** *(2006.01)*

(21) Application number: **08462001.2**

(22) Date of filing: **04.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.08.2007 HU 0700510**

(71) Applicant: **LightTech Lámpatechnológia Kft.**
**2120 Dunakeszi (HU)**

(72) Inventors:
• **Reich, Lajos**
**1141 Budapest (HU)**
• **Hess, Mária**
**2120 Dunakeszi (HU)**

(74) Representative: **Mak, Andras**
**S.B.G. & K. Patent and Law Offices**
**Andrassy ut 113.**
**1062 Budapest (HU)**

(54) **UV tanning lamp with controlled irradiance**

(57) The invention relates to a fluorescent tanning lamp with controlled irradiance which comprises a light-transmitting envelope being transparent for UVA and UVB radiation and intransparent for UVC radiation; means for generating a discharge within the envelope; - a discharge sustaining fill contained in the envelope for emitting short wave ultraviolet rays during lamp operation; a phosphor-containing layer coated on an inner surface of the envelope for converting the shorter wave ultraviolet light (UVC) into longer wave ultraviolet light (UVB, UVA). The coating further comprises an additive for decreasing the output radiation energy of light at least in the UVA spectrum.

EP 2 023 374 A2

## Description

### Field of the Invention

The present invention relates generally to fluorescent lamps and more specifically to fluorescent lamps that emits UVA and UVB radiation, thereby providing a cosmetic tanning effect.

### Description of Related Art

Fluorescent lamps also emitting light in the UV range are widely used as cosmetic sun tanning lamps as a replacement of natural sunlight at locations where and in seasons when the supply of natural sunlight proves insufficient to provide the required tanning effect.

When considering the effects of UV radiation on human skin and the environment, the range of UV wavelengths is often subdivided into UVA (400-315 nm), also called Long Wave or "blacklight"; UVB (315-280 nm), also called Medium Wave; and UVC (< 280 nm), also known as Short Wave or "germicidal".

Tanning of the skin is caused by an increase or release of a brown pigment called melanin into the skin's cells after moderate exposure to UVA and/or UVB radiation. Melanin is produced by cells called melanocytes, and it protects the body from the harmful effects of absorbing an excess of solar radiation. UVB is regarded as the main stimulant of the production and secretion of new melanin in the skin; therefore UVB provides a permanent pigmentation. A further positive effect of UVB radiation is its stimulation of the production of vitamin D3 in the skin. UVA radiation causes the melanocytes to release preexisting melanin, which then will combine with oxygen (oxidize), creating the actual tan color in the skin; consequently, it is considered responsible for the immediate pigmentation.

Beside the positive effects of UVA and UVB radiation of the sun tanning lamps, there are also some negative side effects which are practically the same as of natural sunlight, making it necessary to introduce special safety regulations when applying such radiation to human skin.

Overexposure to UVB radiation can lead to an increased reddening of the skin called erythema (sunburn/skin inflammation). The minimal dose causing erythema is called Minimal Erytemal Dose (MED), which is mainly dependent on the phototype of the skin. The unit of erythemal radiation is the Standard Erythema Dose (SED), where 1 SED is equivalent to an erythemal effective radiant exposure of 100 Jm-2 (CIE 1998). It requires an exposure of about 3 SED to produce just minimal erythema in the unacclimatized white skin of the most common northern European skin types (Harrison & Young 2002). An exposure of 5-8 SED will result in moderate sunburn, and 10 SED or more can result in a painful, blistering sunburn. Individual skin-sensitivity to erythema can be assessed by determining the Minimal Erythema Dose (MED) that is individually different depending on the skin type (melano compromised 1-3 SED, melano competent 3-7 SED, melacon protected 7-12). UVB is further thought to cause the formation of moles and some types of skin cancer (but not melanoma).

Conventional sun tanning lamps such as disclosed in US 4,194,125 emit ultraviolet radiation primarily or exclusively in the UVA range and emit no radiation in the UVC range. The usual UVB/UVA emission power ratio is 0,02 to 0,08.

Some tanning lamps, such as disclosed by US 6,208,069, US 4,683,379 and US 4,843,279 have higher UVB/UVA ratio or a relatively high UVB irradiance in order to provide more efficient tanning effect while requiring shorter exposure times. This shorter exposure time however results in a lower margin of error in the determination of the exposure time, which then increases the likelihood of a burn (doses > 1 MED). Usually, lamps used in sunbeds and sunbooths are not rated by their total output, but rather by their ratio of UVA to UVB. Therefore, the rating on such lamps is representative for the relative amount of UV radiation, defining a 5% lamp with a UV spectrum of 5% UVB and 95% UVA.

Using the same number of the same lamps in two diverse tanning bed models can give completely different results in the average or maximum exposure times, therefore only the tanning beds are rated according to their exposure times while tanning lamps are not. Smaller home tanning beds usually have 12 to 28 100 watt lamps, while systems found in salons can run from 24 to 60 lamps, each consuming 100 to 200 watts. The average session time of a tanning bed is 15 to 20 minutes. Tanning beds can be used in a horizontal position, while the so-called tanning booths in a vertical position. Generally, tanning booths use 160 watt VHO (Very High Output) lamps. The average tanning booth has from 32 to 56 lamps and has a 10 to 15 minute tanning session time due to the higher power output of the lamps.

In Europe, the safety requirements of the tanning devices used for cosmetic tanning purposes will be defined on the basis of the Opinion on the Biological effects of ultraviolet radiation relevant to health, with particular reference to sunbeds for cosmetic purposes established by the Scientific Committee on Consumer Products (SCCP) also known as an appendix to the Low Voltage Directive. According to this proposal, the minimal exposure time should not be less than 10 minutes during which 1 MED should not be exceeded. This would result in a maximum of the erythemal-weighted irradiance of 11 SED/h (0.3 W/m2), which is an equivalent to UV index (UVI) of 12. The erythemally effective irradiance may be expressed mathematically as:

$$\sum_{280}^{400} E(\lambda) \cdot \varepsilon(\lambda) \cdot \Delta\lambda \qquad (1)$$

where $E(\lambda)$ is the relative spectral power distribution of the UV source and $\varepsilon(\lambda)$ is the erythemal effectiveness of radiation of wavelength $\lambda$ nm (CIE 1998). In specifying an upper limit of irradiance, the important quantity is the erythemally weighted irradiance, obtained by weighting each spectral irradiance component of the lamp by its relative effectiveness to induce erythema and summing overall wavelengths present in the source spectrum (see equation above). To minimize the risk of timing errors, which might result in "sunburn", it is desirable that the prescribed sunbed exposure session should be no less than 10 minutes.

To solve the problem of the invention, it would be possible to control the irradiance of the lamp by controlling the thickness of the light-emitting layer comprising at least one phosphor. When examining the influence of the light-emitting layer (phosphor) of a fluorescent, more specifically a UV lamp, one can observe that there is an optimum value of the layer's thickness with a maximum of output power of the emitted light. When increasing the thickness of the light-emitting layer, the intensity of the emitted light will slightly decrease. Decreasing the thickness of the light-emitting layer will, however, result in a rapid decrease of the intensity of the emitted light. This way, the intensity of the emitted light would be diminished, both by increasing and decreasing the thickness of the light-emitting layer. A reduction of the intensity of the output light by increasing the thickness of the light-emitting layer would, however, require a substantial increase in the amount of phosphor used, resulting in high manufacturing costs and selling prices. A thick phosphor layer would also impair adhesion properties and aesthetic appearance of the phosphor layer. By using a thinner layer these drawbacks could be avoided, however, lumen maintenance of the lamp would decrease and - due to better visibility - the blackening of the envelope's inside wall would increase.

The intensity of the emitted light could also be reduced by selecting a lower electric power of the ballast circuit, which is responsible for limiting the discharge current flowing through the discharge tubes. This solution, however, would require the constructive modification of all, or a very large part of the existing sunbeds and sunbooths.

US 4,469,951 suggests a method and apparatus for tanning or UV treatment. A method of tanning or treatment with ultraviolet radiation consists of providing a source of artificial ultraviolet radiation; providing a motor powered turntable in juxtaposition to the source of artificial ultraviolet radiation; energizing the source of artificial ultraviolet radiation; positioning an individual or object to be irradiated on the turntable; and energizing the motor of the turntable to rotate it for a selected period of time. Preferably, the sources of artificial ultraviolet radiation are elongated fluorescent sun lamps, which provide separate sources of UVA and UVB radiation. The turntable is rotated at least one complete revolution during the selected time that the individual or object is positioned thereon and more preferably at a rate of one revolution per minute. The sun lamps may be energized for the same selected period of time as the turntable, although when both UVA and UVB lamps are provided, the timers allow less time for the UVB radiation than for the UVA radiation. Preferably, the same timer-controlled circuit energizes both the turntable and the UVA lamp, and the UVB lamp is energized by a separate timer-controlled circuit. This solution would enable total control over the power of the UVA and UVB part of the radiation during exposure, however, it requires rather complicated mechanical moving and electrical control apparatus, and therefore it cannot be used in conventional sunbeds.

Therefore it is an objective of the present invention to provide a low pressure fluorescent lamp emitting light in the UVA and UVB spectrum that can be used as a UV tanning lamp with controlled irradiance in a tanning apparatus that complies with higher safety requirements.

It is a further objective of the invention to provide a low-pressure fluorescent lamp emitting light in the UVA and UVB spectrum, the intensity of which may be controlled without the need for any change in the constructive elements outside the lamp so that it can be used in conventional sunbeds without any constructional change.

The total irradiance of a specific sunbed depends on the number and intensity of lamps and various other constructional factors, therefore the parameters of a lamp alone will not determine the total radiating power of the sunbed. In order to comply with higher safety requirements, such as proposed by the new EU regulation, it is necessary to provide UV lamps with different, controlled output radiating intensity.

**Disclosure of the invention**

The objectives of the invention may be accomplished by using a fluorescent lamp, preferably a low-pressure mercury discharge lamp for tanning purposes which comprises:

- a light-transmitting envelope being transparent for UVA and UVB radiation and intransparent for UVC radiation;
- means for generating a discharge within the envelope;
- a discharge sustaining fill contained in the envelope for emitting short wave ultraviolet rays during lamp operation;
- a phosphor layer coated on an inner surface of the envelope for converting the shorter wave ultraviolet light (UVC) into longer wave ultraviolet light (UVB, UVA). In an improvement according to the invention, the coating further comprises an additive for decreasing the output radiation energy of light, at least in the UVA spectrum.

By using an additive for decreasing the output radiation energy of light in the UVA spectrum, a lamp with reduced output intensity in the UVA spectrum may be obtained which complies with higher safety requirements, without the necessity of changing the electric power, size, or the number of lamps used in a tanning device.

**Short description of the drawings**

The invention will be described in more detail below on the basis of and in connection with exemplary embodiments shown in the drawings, in which

Fig. 1 is a side view of a fluorescent lamp partly in cross section,
Fig. 2 is a cross sectional view of an embodiment of the lamp shown in Fig. 1,
Fig. 3 is a cross sectional view of an embodiment of the lamp shown in Fig. 1,
Fig. 4 is a spectral power distribution chart of the first lamp of the invention,
Fig. 5 is a diagram showing the emitted power of the lamp shown in Fig. 4 as a function of the percentage of -an additive ($Al_2O_3$),
Fig. 6 is a spectral power distribution chart of a second lamp of the invention,
Fig. 7 is a diagram showing the emitted power of the lamp shown in Fig. 6 as a function of the percentage of an additive ($Al_2O_3$),
Fig. 8 is a spectral power distribution chart of a third lamp of the invention,
Fig. 9 is a diagram showing the emitted power of the lamp shown in Fig. 8 as a function of the percentage of an additive ($Y_2O_3$ or $La_2O_3$).

**Description of preferred embodiments**

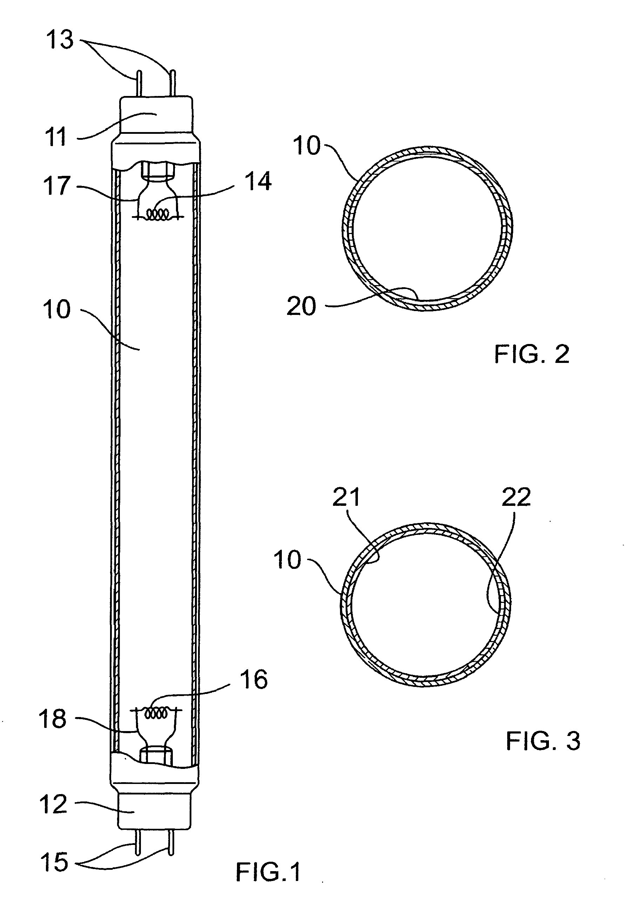

Reference is made to Fig. 1 illustrating a low pressure discharge lamp which comprises a discharge tube 10 made of glass for transmitting both visible and UV light in the UVA and UVB spectrum with $\lambda > 280$ nm and completely blocking UV radiation in the UVC spectrum with $\lambda < 280$ nm. The discharge tube contains a quantity of mercury as a means for generating a discharge within the envelope and an inert gas such as argon, krypton or the like as a discharge sustaining fill for emitting short wave ultraviolet rays mainly in the UVC range during lamp operation. At both ends, the discharge tube 10 has sealed in electrodes 14, 16 and lead-in wires 17, 18. Suitable bases 11 and 12 are fixed to the ends of discharge tube 10 and carry contact pins 13, 15, which are connected to the lead-in wires in order to energize the electrodes in operation when connected to a line voltage. The discharge tube is formed as a glass envelope with a substantially circular configuration in cross-section.

The lamp shown in Fig. 1 may be of any standard size, for example 6' of type T12 for use in connection with a sun bed, sun booth, a smaller sized personal tanning apparatus, or any special size to be used in a specific apparatus in order to achieve the desired tanning effect. Although the lamp illustrated is sealed and has electrodes on both ends of a straight discharge tube, it will be apparent to those skilled in the art that any other form, size, and construction of a fluorescent lamp may be used just as well for the purposes of the invention.

Usually, in fluorescent lamps a suitable light emitting layer or coating is used on the inner surface of the discharge tube which comprises at least one phosphor compound having special absorption and emission characteristics. All of the phosphors used in discharge lamps absorb the shorter wave UV radiation (mainly UVC radiation) generated by the arc discharge within the lamp and re-emit this energy at a different, more useful longer wave UV spectrum. Some of the phosphors used in low-pressure discharge lamps also emit light in the visible light spectrum.

According to the invention, the light-emitting phosphor layer also comprises an additive for decreasing the output radiation energy of light at least in the UVA spectrum in order to provide for a controlled irradiance.

The mixture of at least one phosphor and an additive is used for creating a suspension which covers the inside surface of the discharge tube. This coating is then burned to provide the required mechanical strength. As it is apparent to those skilled in the art, further layers may be applied in addition to the phosphor layer. Such layers may, for example, include a protective layer, a reflective layer and other layers. The light-emitting phosphor layer provides a light emission mainly in the UVA and sometimes also in the UVB spectrum.

The additive is selected for attenuating at least the energy of UVA light substantially in direct proportion with the relative amount of the additive. Using such an additive will enable to control the output energy of emitted light in a wide range in direct proportion with the relative amount of the additive.

Ideally, the additive for reducing and thereby controlling the output luminescence of the lamp may be a compound that acts as a gray filter that does not change the emission and absorption characteristic of the phosphor compounds used in the light-emitting layer of the discharge lamp. The additive itself should not emit light or absorb any part of the spectrum in a different manner. Furthermore, the additive should not attract or bind mercury. In order to preserve maintenance of the lamp, the additive should be of high purity, such as 99.99% or above.

According to an aspect of the invention, the additive for reducing and thereby controlling the output luminescence of the lamp may be aluminium-oxide (alumina - $Al_2O_3$), yttrium-oxide (yttria - $Y_2O_3$), lanthanum-oxide ($La_2O_3$), or a similar compound or a combination of these. When examining the influence of the particle size of the additive on the performance of the lamp, it has been found that a particle size of 0,5 to 10 $\mu$m, or preferably of 2 to 6 $\mu$m is most suitable to achieve the required effect. A smaller particle size within the range identified above results in a higher absorbing capacity of the additive, or in other words, the same amount of additive with a smaller particle size would attenuate the emitted light more effectively. Larger particle sizes, on the other hand, would result in an additive with a lower absorbing capacity, in other words, the same amount of additive with a larger particle size would attenuate the emitted light less effectively. Smaller particle sizes, however, have a negative impact on the maintenance during the lifetime of the lamp; so additives with a smaller particle size would result in a reduced lifetime of the lamp. Beside the lower absorbing capacity, particle sizes above 10 $\mu$m would influence the aesthetic appearance of the lamp negatively.

The additives suggested by the invention (aluminium-oxide, yttrium-oxide or lanthanum-oxide) may be used in a crystalline form and in an amount of about 0% to 70% by weight relative to the total amount of the suspension. When alumina is used, the alpha crystalline form has proved to be the most active form. The more additive is used, the more of the emitted light is absorbed by the additive. As the overall thickness of the light-emitting layer is not changed, any increase in the amount of the additive will result in a decrease of the phosphor compound or mixture. Consequently, when 70 % additive is used, only 30 % of the coating will be comprised of a phosphor compound or a mixture of phosphor compounds. As most phosphors have selective absorbing characteristics, which are also used to suppress the mercury line in the UVB range (at 313 nm), a substantial reduction of the amount of the phosphor compounds would increase the emission of the lamp in the UVB range.

In order to achieve a uniform effect, the phosphor and the additive in the suspension and in the light-emitting layer should be distributed uniformly on the inner surface of the envelope of the discharge tube 10 as shown if Fig. 2, where the discharge tube 10 has a uniformly doped phosphor layer 20 on the inside surface.

According to another embodiment, as shown in Fig. 3, the discharge tube 10 has a first layer 21 of a phosphor additive blend on a portion of the inside surface of the discharge tube 10 and a second layer 22 of a phosphor additive blend on the remaining portion of the inside surface of the discharge tube 10. Such an embodiment may be advantageous when different effects along the surface of the lamp should be achieved. To achieve this effect, any pattern may be used for an uneven distribution along the inner surface of the discharge tube providing the desired uneven effect.

According to a specific aspect of the invention, the phosphor additive blend may have an uneven distribution along the longitudinal direction of the discharge tube. This would enable the provision of different reduction-rates of the power spectral distribution characteristics of the lamp along the longitudinal direction, and therefore different exposures would apply to different parts of the human body (e.g. head and body). In another aspect of the invention, the phosphor additive blend may have an uneven distribution along the circumferential direction of the discharge tube. This would provide a lamp with different reduction-rates of the power spectral distribution characteristics along the circumferential direction of the lamp. Such a lamp could be used, for example, as a combination of a low intensity sun tanning lamp and a high intensity sun tanning lamp.

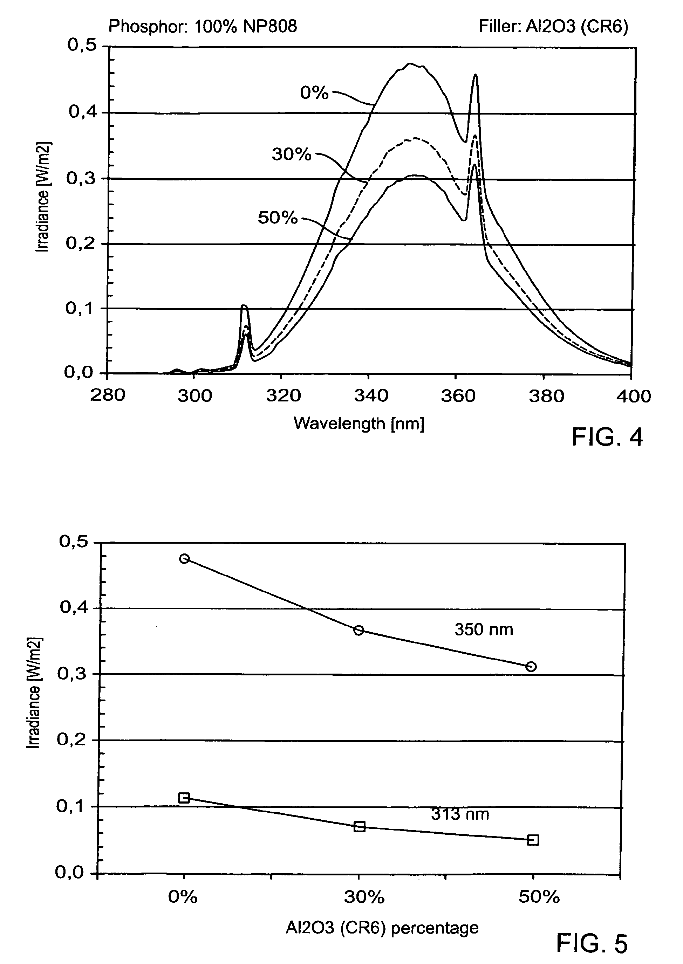

Referring now to Figs 4 to 9, different embodiments of the UV tanning lamp of the invention will be described in more detail.

Example 1

Fig. 4 illustrates the spectral power distribution of a low-pressure discharge lamp with a one-component phosphor coating comprising $BaSi_2O_5$:Pb available from Nichia (JP) under the trade name NP808. Three samples have been prepared with the same tube parameters and the same light emitting layer thickness. In the first sample, the light emitting layer consisted of 100% NP808. In the second sample the light emitting layer consisted of 70% NP808 and 30% $Al_2O_3$, and in the third sample the light emitting layer consisted of 50% NP808 and 50% $Al_2O_3$. Alumina was used in the alpha crystalline form available from Baikowski, under the trade name CR6, which had a particle size of 0,5 to 2 $\mu$m. The emission spectra have been measured within a range of 280 nm to 400 nm, with a double monochromator type Bentham DMc 150 at 25 cm distance from the middle of the lamp, according to IEC 61228. As it can be seen on Fig. 4, increasing the relative amount of the additive will decrease the power of emitted light throughout the measured spectrum in a very similar way.

Fig. 5 illustrates the decreasing power of light emitted by the lamp at two selected wavelengths, the first selected wavelength being in the UVB range at 313 nm, and the second selected wavelength being in the UVA range 350 nm. As the diagram clearly shows, the decrease of the emitted power of the lamp is nearly in direct proportion with the relative amount of the CR6 additive at all wavelengths. When examining the lifetime or maintenance of the lamp, a negative effect has been found when increasing the relative amount of CR6. This could be due to the adsorption of mercury on the light-emitting layer that comprised CR6 in a relative amount above 30%. Particle sizes above 2 $\mu$m provided better results regarding the maintenance of the discharge lamp.

Example 2

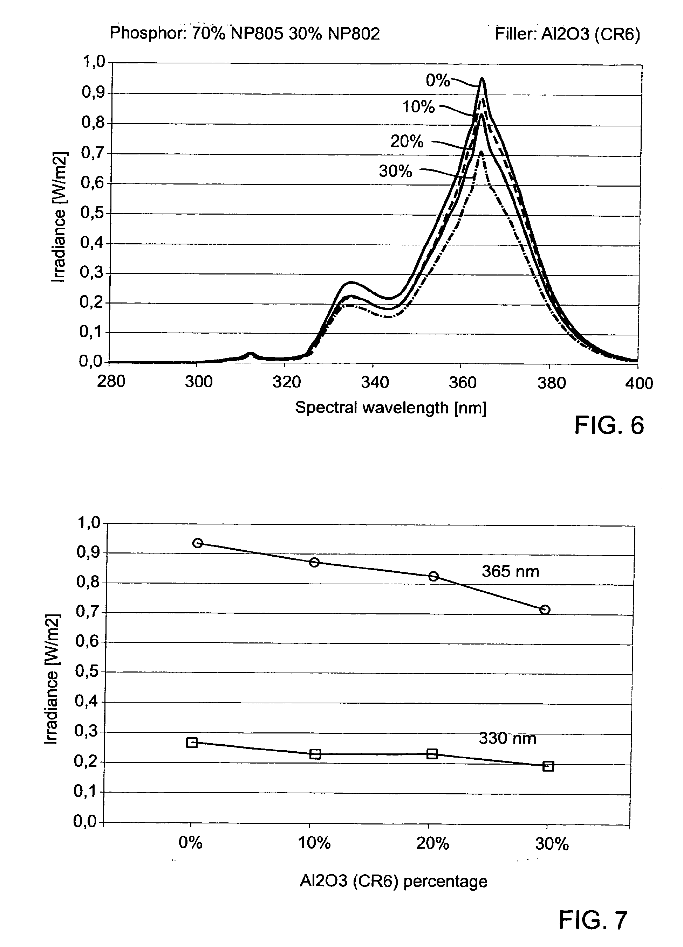

Fig. 6 illustrates the spectral power distribution of a low-pressure discharge lamp with a two-component phosphor coating comprising YP04:Ce available from Nichia (JP) under the trade name NP805 and SrB4O7: Eu available from Nichia (JP) under the trade name NP802. The light-emitting coating comprised 70% of NP805 and 30% of NP802. Four samples were prepared with the same tube parameters and with the same light-emitting layer thickness. In the first sample, the light-emitting layer consisted of 100% phosphor blend (NP805+NP802). In the second sample, the light-emitting layer consisted of 90% phosphor blend and 10% $Al_2O_3$, while in the third sample, the light-emitting layer consisted of 80% phosphor blend and 20% $Al_2O_3$, and in the fourth sample, the light-emitting layer consisted of 70% phosphor blend and 30% $Al_2O_3$. Alumina was used in the alpha crystalline form available from Baikowski under the trade name CR6, which had a particle size of 0,5 to 2 $\mu$m. The emission spectra have been measured within a range of 280 nm to 400 nm, with a double-monochromator type Bentham DMc 150, at 25 cm distance from the middle of the lamp, according to IEC 61228. As it can be seen on Fig. 6, increasing the relative amount of the additive decreases the power of light emitted throughout the measured spectrum.

Fig. 7 illustrates the decreasing power of light emitted by the lamp at two selected wavelengths, both of the selected wavelengths being in the UVA range at 330 nm and at 365 nm. As the diagram clearly shows, the decrease of the emitted power of the lamp is nearly in direct proportion with the relative amount of the CR6 additive at all wavelengths. As the relative amount of CR6 did not exceed 30%, there was no significant change in the maintenance of the lamp. Only a decrease of 1 to 2% could be observed.

Example 3

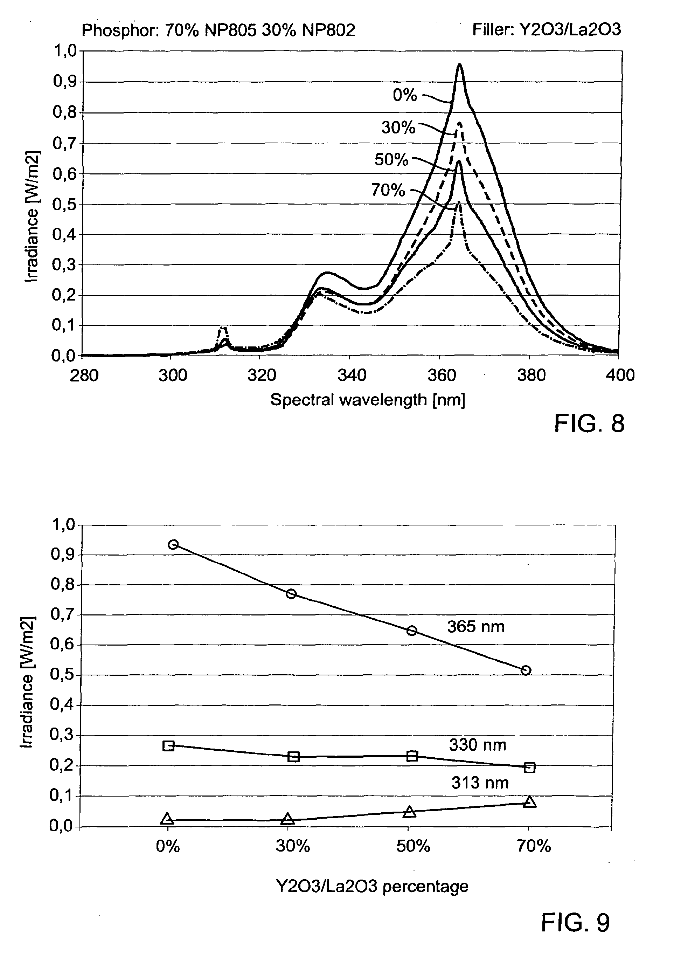

Fig. 8 shows the spectral power distribution of a low-pressure discharge lamp with the same two-component phosphor coating as discussed above in Example 2. Four samples were prepared with the same tube parameters and with the same light emitting layer thickness. In the first or reference sample the light-emitting layer consisted of 100% phosphor blend (NP805+NP802). In the second sample, the light-emitting layer consisted of 70% phosphor blend and 30% $Y_2O_3$, in the third sample, the light-emitting layer consisted of 50% phosphor blend and 50% $Y_2O_3$, while in the fourth sample the light emitting layer consisted of 30% phosphor blend and 70% $Y_2O_3$. Yttria was used in the crystalline form available from Johnson Matthey, which had a particle size of 2 to 6 $\mu$m. The emission spectra have been measured within a range of 280 nm to 400 nm, with a double, monochromator type Bentham DMc 150, at 25 cm distance from the middle of the lamp, according to IEC 61228. As it can be seen on Fig. 8, increasing the relative amount of the additive decreases the power of light emitted throughout the measured spectrum. The measurements have been repeated with lanthanum-oxide as an additive, and the results achieved were substantially the same, therefore it can be assumed that $Y_2O_3$ and $La_2O_3$ are equivalent in terms of the objectives of the present invention.

Fig. 9 illustrates the decreasing power of light emitted by the lamp at three selected wavelengths, two of the selected wavelengths being in the UVA range at 330 nm and at 365 nm, and one of the selected wavelengths being in the UVB range at 313 nm. As the diagram clearly illustrates, the decrease of the emitted power of the lamp is nearly in direct proportion with the relative amount of the additive which was yttria in this example. As yttria - similar to other rear earth elements - repels mercury, the maintenance of the lamp even showed a slight improvement (2-3%) when compared to the first or reference sample.

In this example, the absorbing effect of the additive is not uniform at all wavelengths, which may be due to the characteristics of the two-component phosphor blend. As each of the phosphor components has its individual emission and absorption characteristics, the resulting power emission spectrum will be influenced by all of these characteristics. The additive will attenuate all wavelengths with the same efficacy, but the amount of the phosphor components will also influence the resulting power emission spectrum. As a UVA phosphor, like NP802, significantly absorbs the UVB radiation of a UVB radiating phosphor, like NP805, the reducing the amount of UVA phosphor significantly decreases this absorbing effect. This explains the wavelength dependency of the attenuation curves in Fig. 9. Due to this effect, if a predetermined UVB/UVA ratio is to be achieved or maintained, it may be necessary to reduce the amount of the UVB radiating phosphor when using a higher relative amount of additive.

It is assumed that instead of yttria and lanthanum-oxide, other rear earth oxides may be used for the purposes of the invention with the same effect. As it may be apparent to those skilled in the art, different additional phosphors and layers may be applied in order to achieve different additional effects.

**Claims**

1. A fluorescent tanning lamp with controlled irradiance comprising:

   - a light-transmitting envelope that is transparent for UVA and UVB radiation and intransparent for UVC radiation;
   - means for generating a discharge within the envelope;
   - a discharge sustaining fill contained in the envelope for emitting short wave ultraviolet rays during lamp operation;
- a phosphor-containing layer coated on an inner surface of the envelope for converting the shorter wave ultraviolet light (UVC) into longer wave ultraviolet light (UVB, UVA)

**characterized in that**
the coating further comprises an additive for decreasing the output radiation energy of light at least in the UVA spectrum.

2. The fluorescent lamp of claim 1, **characterized in that**
the additive is selected for attenuating at least the energy of UVA light substantially in direct proportion with the relative amount of the additive.

3. The fluorescent lamp of claim 1, **characterized in that** the additive is a crystalline form of aluminium-oxide, yttrium-oxide, lanthanum-oxide or the like.

4. The fluorescent lamp of claim 1, **characterized in that** the additive has a particle size of 0,5 to 10 $\mu$m, preferably of 2 to 6 $\mu$m.

5. The fluorescent lamp of claim 3, **characterized in that** the aluminium-oxide is used in the alpha crystalline form.

6. The fluorescent lamp of claim 4, **characterized in that** the alpha crystalline form of aluminium-oxide is used as an additive in an amount of 0% to 30% by weight relative to the total amount of the coating.

7. The fluorescent lamp of claim 1, **characterized in that** the crystalline form of yttrium-oxide or lanthanum-oxide is used as an additive in an amount of 0% to 70% by weight relative to the total amount of the coating.

8. The fluorescent lamp of claim 1, **characterized in that** the phosphor and the additive are distributed uniformly on the inner surface of the envelope of the discharge tube.

9. The fluorescent lamp of claim 1, **characterized in that** the phosphor and the additive have an uneven distribution along the inner surface of the discharge tube.

10. The fluorescent lamp of claim 9, **characterized in that** the phosphor and the additive have an uneven distribution along the longitudinal direction of the discharge tube.

11. The fluorescent lamp of claim 9, **characterized in that** the phosphor and the additive have an uneven distribution along the circumferential direction of the

discharge tube.

FIG. 2

FIG. 3

FIG.1

Phosphor: 100% NP808                    Filler: Al2O3 (CR6)

FIG. 4

FIG. 5

FIG. 6

FIG. 7

Phosphor: 70% NP805 30% NP802          Filler: Y2O3/La2O3

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4194125 A
- US 6208069 B
- US 4683379 A
- US 4843279 A
- US 4469951 A